# EUROPEAN PATENT APPLICATION

(11) **EP 1 376 200 A1**
(43) Date of publication of application: **02.01.2004**
(21) Application number: 02013921.8
(22) Date of filing: 24.06.2002
(51) Int. Cl.: G02C 5/12

(54) **Eyeglasses with adjustable trim**

(71) Applicant: Pretolani, Francesco & C. S.n.c., 47014 Meldola (Forli-Cesena) (IT)
(72) Inventor: Pretolani, Francesco, 47014 Meldola (Forli' - Cesena) (IT)
(74) Representative: Modiano, Guido, Dr.-Ing.

(57) **Abstract**

1. Eyeglasses with adjustable trim, constituted by a frame and two lenses, comprising a substantially vertical bush (B), a semicylindrical plate (C) that is substantially parallel to the bush and faces it with its concave portion, the bush and the plate being fixed on the two sides of the front bridge, and a flexible nosepiece (D) with two arms (D1, D2), both of which have, in a downward region, respective pads (E) which are articulated for resting on the two sides of the nose, one (D1) of the arms being able to slide axially and rotate within the bush (B), the other arm (D2) being associable by front interlocking with the plate by elastic deformation of the nosepiece.

## Description

The present invention relates to eyeglasses with adjustable trim.

There are several reasons for requiring the aid of specific eyeglasses: compensating and correcting sight defects; selecting the radiation stream, preventing the passage of harmful radiation; avoiding dazzling and increasing contrast between objects and the background by preventing the passage of polarized radiation produced by the reflection of surfaces such as water, glass and asphalt; reducing excessively intense radiation and possibly adapting at all times the absorbing capacity to variations in optical irradiation intensity; ensuring mechanical protection of the eyes from external agents such as dust and chips.

These same reasons make it even indispensable to use eyeglasses when practicing sports such as motor racing, tennis, skiing, basketball, mountaineering and many others.

The present invention relates to eyeglasses for skeet, hunting and the like, disciplines which even more than others require optimum visual conditions.

The aim of the present invention is to devise eyeglasses, whether corrective, protective or of other kinds, which are preset to allow vertical adjustment of the frame and lenses with respect to the resting of the two pads on the sides of the nose. This is done because the position assumed by shooters and hunters when they normally shoulder a rifle forces them to aim as if they were looking up and therefore above any lenses if said lenses are arranged in the normal configuration of ordinary distance-viewing eyeglasses.

It is therefore evident that in such circumstances it is necessary to lift any lenses in order to position them correctly on the aiming line.

The above aim and other objects which will become better apparent hereinafter, are achieved by eyeglasses as defined in the appended claims.

Further characteristics and advantages of the present invention will become better apparent from the description of preferred but not exclusive embodiments thereof, illustrated by way of non-limitative example in the accompanying drawings and figures, wherein:

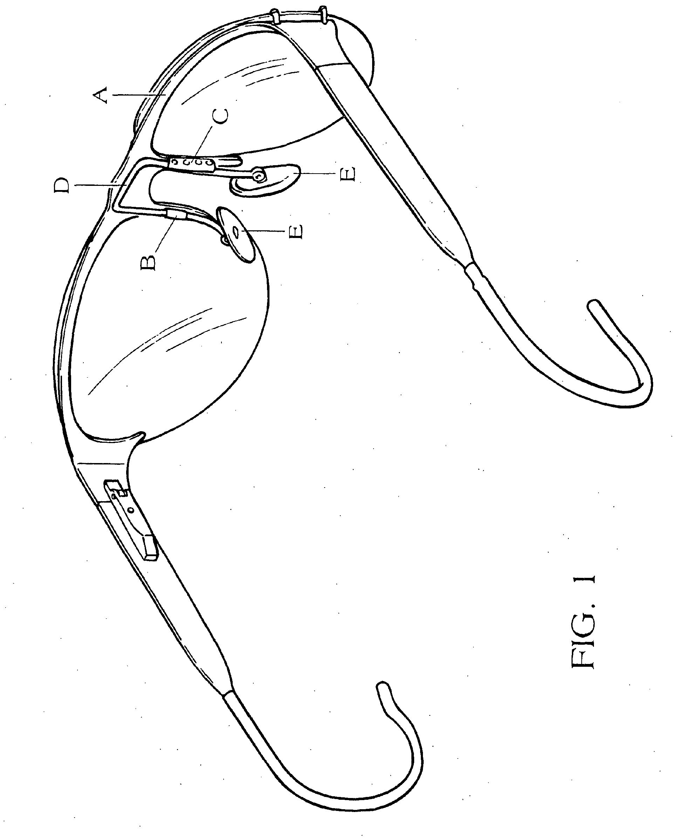

Figure 1, is a perspective view of the improved eyeglasses according to the invention, in their active configuration;

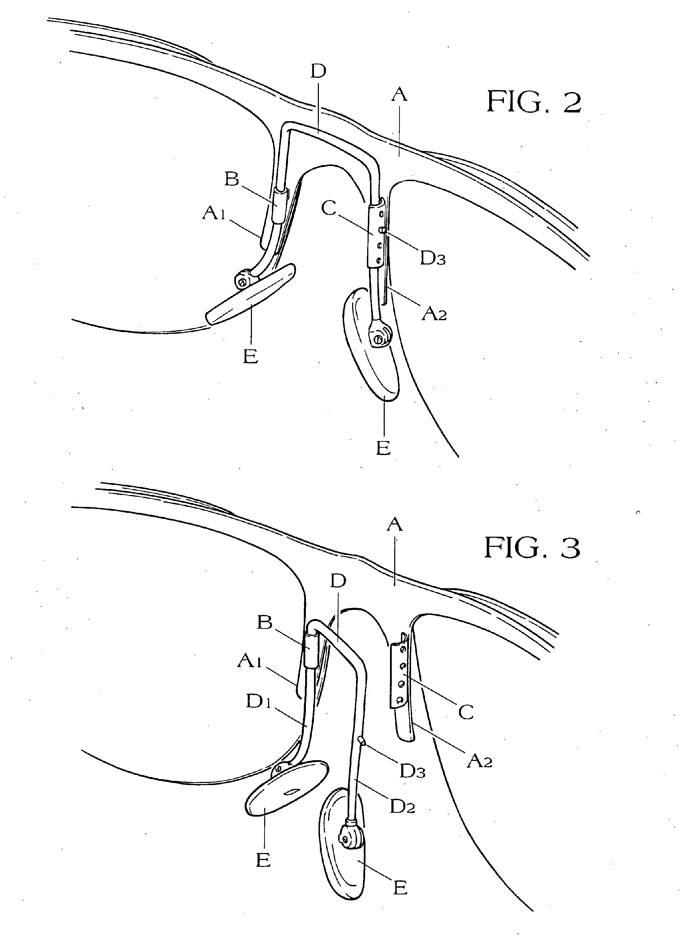

Figures 2 and 3, are detail views of the provision for vertical adjustment of the nosepiece with respect to the frame with the lenses;
Figure 4, is a perspective view of a preferred embodiment of eyeglasses according to the invention, in their active configuration;
Figure 5, is a sectional view taken along the line X-X of Figure 4;
Figure 6, is a perspective view of a preferred embodiment of eyeglasses according to the invention, in the configuration for adjusting the position of the nosepiece;
Figure 7, is a sectional view taken along the line X-X of Figure 6.

With reference to the figures, which relate to rimless eyeglasses with interchangeable lenses, wings A1 and A2 extend downward at the two sides of the bridge of the front A; a bush B protrudes from one of the wings and a curved or semicylindrical plate C protrudes from the other wing, preferably on the inner side of the eyeglasses, the plate being parallel to the bush and facing it with its concave portion.

The hinge-like articulated coupling of the front A and of a nosepiece D is provided in the bush B, and the nosepiece is retained within the bush with one of its two arms D1, D2, which also both have, at their ends, a preferably articulated pad E made of plastics for resting on the nose.

Such bush B allows the rotation and the vertical translational motion of the nosepiece D, which is preferably made of metal and is in any case flexible so that when necessary it is possible to engage and disengage from the semicylindrical plate C, simply with two fingers, the arm D2 that is not hinged and from which a tooth D3 protrudes transversely; such tooth is designed to be engaged in one of the holes that are vertically distributed in the plate C in order to rigidly couple the nosepiece D also in a vertical direction; the optimum position determined initially can be reset easily, in subsequent interventions, by way of the tooth D3.

The provision of locking in a vertical direction the position of the nosepiece D with respect to the frame with the lenses might be replaced with equivalent solutions, such as the provision, as an alternative to the tooth D3 of the nosepiece and to the holes of the semicylindrical plate C, a series of notches alternated with protrusions or saw-tooth portions that prevent, after mutual engagement, the sliding of the nosepiece D with respect to the semicylindrical plate C, which also can be replaced with a plate that has a dihedral shape or any other suitable profile.

In addition to the constructive simplicity and minimal space occupation of the devised provision, which allow its application equally on the inside and on the outside of eyeglasses and in frames having any design and made of any material, it is convenient to consider that the articulated hinge-like connection of the front A of the frame and of the nosepiece D has the additional advantage of preventing the loss of such nosepiece, which is otherwise possible owing to its small dimensions.

It has been noted that problems arise during production and assembly in the coupling between the vertical bush B and the sliding and rotating arm D1; in particular, it is necessary to apply the nose pad E at the end of the sliding and rotating arm D1 after inserting the arm in the bush.

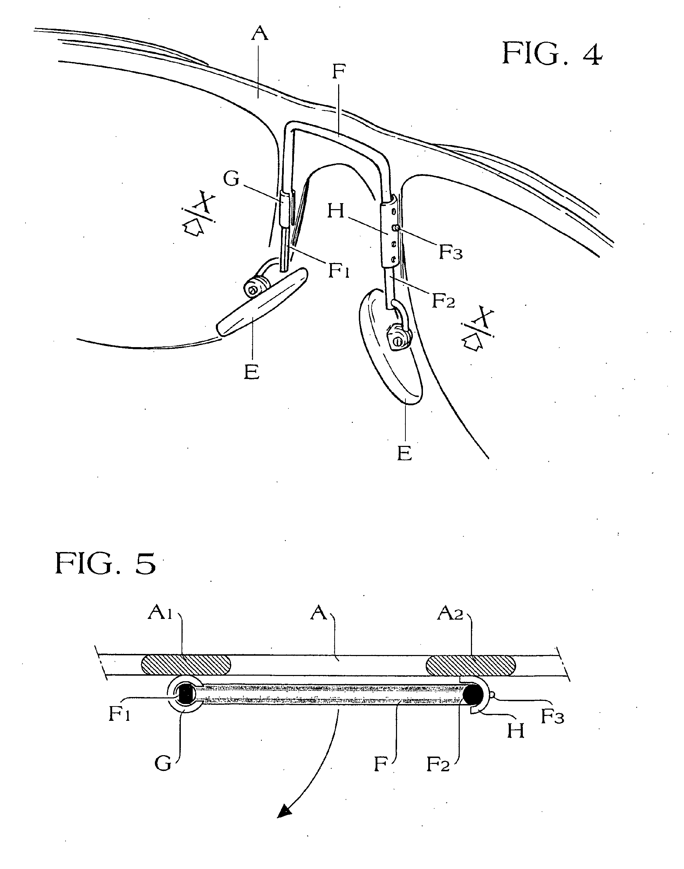

In order to avoid these problems, Figures 4, 5, 6 and 7 illustrate a preferred alternative embodiment of the eyeglasses according to the invention, in which the vertical bush G, fixed to a lateral wing A1 of the frame A, is affected by a longitudinal opening G1.

The reference letter H designates the semicylindrical plate fixed to a lateral wing A2 of the frame A and affected by a series of holes H1, H2, H3...; the reference letter F designates the nosepiece, provided with two arms F1 and F2; a transverse tooth F3 is provided in the arm F2 and respective pads E made of plastics are articulated to the ends of the arms.

The sliding and rotating arm F1 has a narrower region F4 that is at least as long as the bush G for front insertion in a longitudinal opening G1.

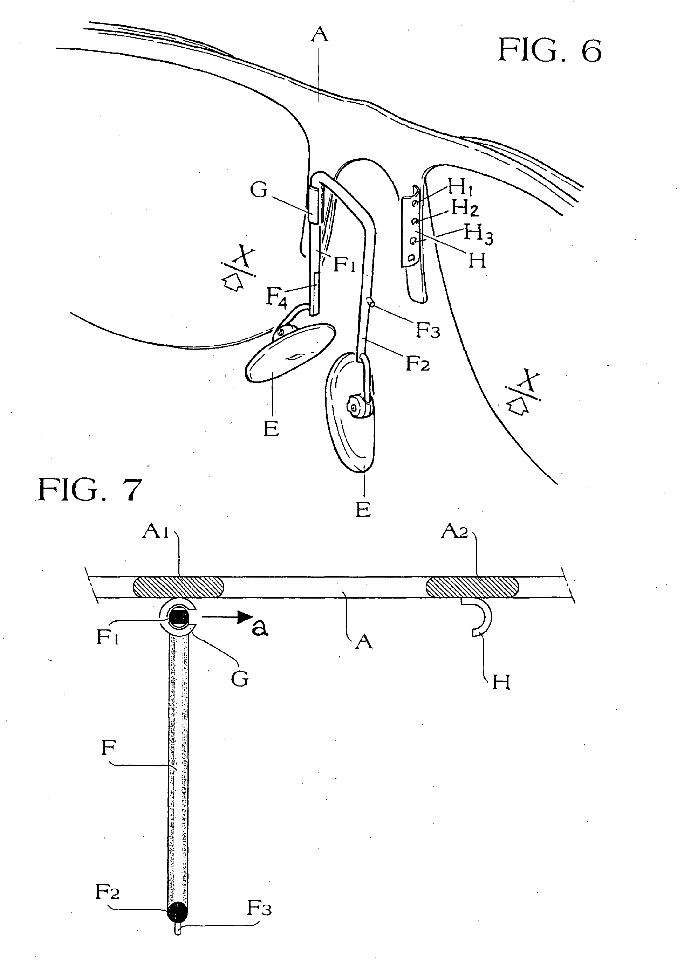

Advantageously, the narrower region F4 is provided by forming in the arm F1 two opposite flat portions, which define a configuration for extracting the nosepiece in the direction of the arrow "a" (see Figures 6 and 7).

In the configuration for use, which is rotated through 90 degrees with respect to the extraction configuration (see Figures 4 and 5), the flat portions of the narrower regions F4 reach a condition in which they cannot be removed through the longitudinal opening G1.

The invention thus conceived is susceptible of numerous modifications and variations, all of which are within the scope of the inventive concept.

All the details may further be replaced with other technically equivalent elements.

In practice, the materials employed, so long as they are compatible with the specific use, as well as the contingent shapes and dimensions, may be any according to requirements.

The disclosures in Italian Utility Model Application No. F02001U000004 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. Eyeglasses with adjustable trim, constituted by a frame and two lenses, **characterized in that** they comprise a substantially vertical bush, a semicylindrical plate that is substantially parallel to the bush and faces it with its concave portion, said bush and said plate being fixed on the two sides of the front bridge, and a flexible nosepiece with two arms, both of which have, in a downward region, respective pads which are articulated for resting on the two sides of the nose, one of said arms being able to slide axially and rotate within said bush, the other arm being associable by front interlocking with said plate by elastic deformation of said nosepiece.

2. The eyeglasses according to claim 1, **characterized in that** said semicylindrical plate has a series of vertically distributed holes, in each of which a tooth that protrudes transversely from said associable arm can be coupled selectively so as to interlock, in order to allow the vertical translational motion of said nosepiece with respect to the frame and its easy fixing in a series of positions.

3. The eyeglasses according to claim 1, **characterized in that** said semicylindrical plate has a cavity shaped like a dihedral, for selective interlocking coupling in a series of notches alternated with protrusions or saw-tooth elements formed on the surface of said associable arm, in order to allow the vertical translational motion of said nosepiece with respect to the frame and its easy fixing in a series of positions.

4. The eyeglasses according to one or more of the preceding claims, **characterized in that** said vertical bush has a longitudinal opening and **in that** said sliding and rotating arm has a narrower region that is at least as long as said bush for front insertion in said longitudinal opening.
